(19) Europäisches Patentamt
European Patent Office
Office européen des brevets

(11) Veröffentlichungsnummer: **0 025 159**
**B1**

(12) # EUROPÄISCHE PATENTSCHRIFT

(45) Veröffentlichungstag der Patentschrift: **09.05.84**

(51) Int. Cl.³: **C 08 F 12/20**, G 02 B 1/04

(21) Anmeldenummer: **80105036.0**

(22) Anmeldetag: **25.08.80**

(54) **Verwendung von Polymerisaten des Styrols zur Herstellung von optischen Systemen.**

(30) Priorität: **07.09.79 DE 2936131**

(43) Veröffentlichungstag der Anmeldung:
**18.03.81 Patentblatt 81/11**

(45) Bekanntmachung des Hinweises auf die Patenterteilung:
**09.05.84 Patentblatt 84/19**

(84) Benannte Vertragsstaaten:
**BE CH DE FR GB IT LI NL**

(56) Entgegenhaltungen:
**FR - A - 1 355 817**

**CHEMICAL ABSTRACTS, Band 68, Nr. 14, 1968, Seite 5805, Zusammenfassung Nr. 59947w, Columbus, Ohio, US, B.N. LUNDIN et al.: "Synthesis of m-trifluoromethylstyrene and its polymerization in the presence of benzoyl peroxide"**
**CHEMICAL ABSTRACTS, Band 81, Nr. 22, 2. Dezember 1974, Seite 15, Zusammenfassung Nr. 136772h, Columbus, Ohio, US**
**CHEMICAL ABSTRACTS, Band 56, März 1962, Zusammenfassung Nr. 2559e, Columbus, Ohio, US, L.A. WALL et al.: "Degradation of poly(2,3,4,5,6-pentafluorostyrene)**

(73) Patentinhaber: **BAYER AG, Konzernverwaltung RP Patentabteilung, D-5090 Leverkusen 1 Bayerwerk (DE)**

(72) Erfinder: **Bömer, Bruno, Dr., Gustav-Freytag-Strasse 2, D-5090 Leverkusen 1 (DE)**
Erfinder: **Süling, Carlhans, Dr., Carl-Leverkus-Strasse 10, D-5068 Odenthal (DE)**
Erfinder: **König, Joachim, Dr., Auf dem Broich 25, D-5068 Odenthal (DE)**
Erfinder: **Hespe, Hans, Dr., Walter-Flex-Strasse 14, D-5090 Leverkusen 1 (DE)**
Erfinder: **Heynemann, Karl, Dipl.-Ing., Flurweg 15, D-8021 Taufkirchen (DE)**
Erfinder: **Weber, Raimund, Baumberger Strasse 66, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die vorliegende Erfindung betrifft die Verwendung von Polymerisaten aus Vinylmonomeren, die als Monomereinheiten substituierte Styrole mit mindestens 3 Fluoratomen enthalten als optisches Material zur Herstellung von optischen Systemen.

Man hat bereits optische Systeme, z. B. Linsen für photographische Kameras aus durchsichtigen Kunststoffen hergestellt. Praktische Bedeutung haben nur thermoplastische Kunststoffe, weil sie sich rationell und erheblich besser als Glas verarbeiten lassen. Eine aussergewöhnliche Stellung hat Polymethylmethacrylat, weil es als einziger Thermoplast anstelle von niedrig brechenden Silikatgläsern zur Herstellung von Sammellinsen technisch eingesetzt wird.

Ebenfalls gebräuchlich sind Polystyrol, Styrol-Acrylnitril-Copolymerisate und Bisphenol-A-Polycarbonate (Plaste und Kautschuk 19, 41–44 (1972)), die jedoch ausschliesslich für Zerstreuungslinsen eingesetzt werden. Diese Materialien besitzen entweder die Kombination eines niedrigen Brechungsindex und einer kleinen Dispersion (gleich grosse Abbé-Zahl) wie beispielsweise Polymethylmethacrylat oder die Kombination eines hohen Brechungsindex und einer hohen Dispersion (gleich kleine Abbé-Zahl) wie Polystyrol oder aromatische Polycarbonate.

Bei der Berechnung optischer Systeme, beispielsweise Linsensysteme für Kameras kann man nicht bestimmte Abbildungseigenschaften vorgeben und daraus Brechungsindices, optische Dispersionen und Geometriedaten des Systems errechnen, sondern man muss umgekehrt vorgehen. Man gibt Brechungsindices, optische Dispersionen und Geometriedaten vor und errechnet daraus die Abbildungseigenschaften. Man ist also darauf angewiesen, viele Rechnungen durchzuführen und dabei systematisch zu variieren, um zu einem für den vorgegebenen Zweck brauchbaren System zu kommen. Hier unterliegt man nun einschneidenden Beschränkungen, weil günstige errechnete Systeme nur dann realisierbar sind, wenn die optischen Materialien mit den erforderlichen Brechungsindices und optischen Dispersionen auch zur Verfügung stehen. Daher besteht ein besonderer Bedarf an leicht, beispielsweise durch thermoplastische Verformung, verarbeitbaren optischen Stoffen, die andere Kombinationen von Brechungsindex und optischer Dispersion besitzen, als sie die bisher bekannten und zugänglichen Materialien haben.

Es wurden nun Homo- und Copolymerisate aus Vinylmonomeren gefunden, die als Monomereinheiten substituierte Styrole mit mindestens 3 Fluoratomen enthalten. Diese Polymerisate weisen überraschenderweise die technisch sehr interessante Kombination von niedrigem Brechungsindex und hoher Dispersion (gleich niedrige Abbé-Zahl) auf. Diese Kombination ist weder bei den bekannten anorganischen Gläsern, noch bei den bisher für optische Zwecke eingesetzten thermoplastischen Polymeren vorhanden.

Die Erfindung betrifft die Verwendung von Homo- und Copolymerisaten, die als Monomereinheiten mindestens ein Styrol der Formel

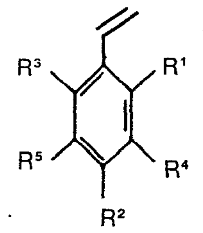

(I)

enthalten, in der

$R^1$, $R^2$ und $R^3$ unabhängig voneinander Wasserstoff, Fluor oder teilweise oder vollständig fluoriertes Alkyl oder Alkoxy bedeuten und

$R^4$ und $R^5$ unabhängig voneinander für Wasserstoff oder Fluor stehen, wobei die Gesamtzahl der Fluoratome in den Resten $R^1$ bis $R^5$ mindestens 3 und die Gesamtzahl der Kohlenstoffatome in den Resten $R^1$ bis $R^3$ höchstens 8 beträgt, zur Herstellung optischer Systeme.

Die Erfindung betrifft bevorzugt die Verwendung von Homo- und Copolymerisaten, die mindestens ein Styrol der Formel

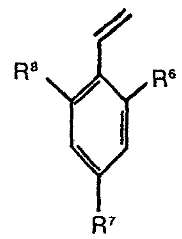

(II)

enthalten, in der

$R^6$, $R^7$ und $R^8$ unabhängig voneinander Wasserstoff oder fluoriertes Alkyl bedeuten, wobei die Gesamtzahl der Fluoratome in den Resten $R^6$ bis $R^8$ mindestens 3 und die Gesamtzahl der Kohlenstoffatome in den Resten $R^6$ bis $R^8$ 1 bis 6 beträgt, zur Herstellung optischer Systeme.

Die Erfindung betrifft in besonders bevorzugter Weise Homo- und Copolymerisate, die mindestens ein Styrol aus der Gruppe o-Trifluormethyl-styrol, p-Trifluormethyl-styrol, p-Heptafluorisopropyl-styrol und o,p-Bis-trifluormethyl-styrol enthalten. Aus dieser Gruppe seien besonders das o-Trifluormethyl-styrol und das p-Trifluormethyl-styrol für die genannten Polymerisate hervorgehoben.

Als teilweise oder vollständig fluoriertes Alkyl sei beispielsweise ein solches mit 1 bis 4 Kohlenstoffatomen genannt, wie Monofluormethyl, Difluormethyl, Trifluormethyl, α-oder β-Monofluorethyl, zweifach bis vierfach durch Fluor substituiertes Ethyl, Perfluorethyl, einfach bis sechsfach fluorsubstituiertes Propyl oder Isopropyl, Perfluorpropyl, Perfluorisopropyl, einfach bis achtfach fluorsubstituiertes Butyl oder Isobutyl, Perfluorbutyl, Perfluorisobutyl oder Perfluor-tert-butyl. Bevorzugt sind die perfluorierten Alkylreste, wie Trifluormethyl, Pentafluorethyl, Heptafluorpropyl, Heptafluorisopropyl, Perfluorbutyl,

Perfluorisobutyl und Perfluor-tert-butyl. Besonders bevorzugt ist das Trifluormethyl.

Als teilweise oder vollständig fluoriertes Alkoxy sei beispielsweise ein solches mit 1 bis 4 Kohlenstoffatomen genannt, wie Monofluormethoxy, Difluormethoxy, Trifluormethoxy, einfach bis fünffach fluorsubstituiertes Ethoxy, einfach bis siebenfach fluorsubstituiertes Propoxy oder Isopropoxy, einfach bis neunfach fluorsubstituiertes Butoxy oder Isobutoxy, bevorzugt Trifluormethoxy, Pentafluorethoxy, Perfluorpropoxy, Perfluorisopropoxy, Perfluorbutoxy, Perfluorisobutoxy, Perfluor-tert-butoxy, besonders bevorzugt Trifluormethoxy.

Die in den beschriebenen Polymerisaten als Monomere enthaltenen Styrole haben mindestens 3 Fluoratome.

Tragen die in den beschriebenen Polymerisaten enthaltenen Styrole mehrere Alkyl- oder Alkoxyreste, so beträgt die Zahl der insgesamt darin vorkommenden Kohlenstoffatome höchstens 8, bevorzugt höchstens 6, besonders bevorzugt höchstens 2.

Die Polymerisate können eines oder mehrere der genannten, mindestens 3 Fluoratome enthaltenden Styrole enthalten, so dass beispielsweise ein Homopolymerisat eines der Styrole der Formel (I) oder ein Copolymerisat zweier oder mehrerer Styrole der Formel (I) zu den erfindungsgemäss zu verwendenden Polymerisaten zählen. Es ist weiterhin möglich, dass die Polymerisate neben einem oder mehreren der genannten fluorhaltigen Styrole weitere Vinylmonomere enthalten.

Als Vinylmonomere, die in den Polymerisaten neben den genannten fluorhaltigen Styrolen enthalten sein können, seien beispielsweise Acrylsäureester, wie Acrylsäuremethylester, Acrylsäureethylester, Acrylsäurebutylester; Methacrylsäureester, wie Methacrylsäuremethylester, Methacrylsäureethylester, Methacrylsäurebutylester; Acrylnitril; Styrol oder durch Alkyl, Alkoxy, Halogenalkyl, Halogenalkoxy oder Halogen substituierte Styrole, wie ortho-, meta- oder para-Methylstyrol, ortho-, meta- oder para-Ethylstyrol, ortho-, meta- oder para-Butylstyrol, ortho-, meta- oder para-Methoxystyrol, m-Trifluormethylstyrol, m,m-Bis-trifluormethylstyrol, Trichlormethylstyrol, m-Trifluormethoxystyrol, oder ortho-, metha- oder para-Chlorstyrol; Butadien, Isopren, Methacrylnitril, α,β-ungesättigte Ketone, Maleinsäureanhydrid oder Itaconsäureanhydrid genannt. Bevorzugte Comonomere sind die genannten Acrylsäureester, Methacrylsäureester, Styrol, durch Alkyl, Alkoxy, Halogenalkyl, Halogenalkoxy oder Halogen substituierte Styrole und Acrylnitril. Die Polymeren können neben einem oder mehreren Styrolen der Formel (I) eines oder mehrere der genannten Comonomeren enthalten. Bevorzugt enthalten die erfindungsgemäss zu verwendenden Polymerisate ein Styrol der Formel (I) und gegebenenfalls eines der genannten Comonomeren.

Für den Fall, dass die Polymerisate Copolymerisate sind, enthalten sie mindestens 30 Gew.-%, bevorzugt mindestens 45 Gew.-% eines oder mehrerer Styrole der Formel (I).

Die Polymerisate haben überraschenderweise die besondere Kombination von niedrigem Brechungsindex und hoher Dispersion (das entspricht einer niedrigen Abbé-Zahl) und eignen sich daher besonders für die Herstellung von optischen Systemen, in denen Farbfehler und Bildfeldwölbung gemeinsam zu korrigieren sind. Als niedriger Brechungsindex sei $n_D$ von etwa 1,42 bis etwa 1,55 und als niedrige Abbé-Zahl $v_D$ von etwa 30 bis etwa 50 genannt. Durch die angegebene Kombination befindet sich diese Gruppe von Polymerisaten im n-v-Diagramm unterhalb des Bereiches der sogenannten «Tiefflinte» und ermöglicht daher in Kombination mit hoch brechenden Gläsern die Berechnung von Systemen, die die Bedingungen für Neuachromate erfüllen (N. Berek, Grundlagen der praktischen Optik, Verlag Walter de Gruyter, Berlin 1930, Seiten 108 bis 110). Aus der Gruppe der erfindungsgemäss zu verwendenden Polymerisate können Zerstreuungslinsen oder Sammellinsen hergestellt werden.

Optische Systeme sind bei ihrer Anwendung häufig einer thermischen Belastung unterworfen, beispielsweise durch Sonneneinstrahlung auf ein schwarzes Kameragehäuse oder durch die Wärmestrahlung einer starken Studio-Ausleuchtung oder einer innerhalb des optischen Systems angebrachten starken Lichtquelle. Zur Einhaltung der hohen Anforderungen an die Massgenauigkeit von optischen Linsen müssen thermoplastische Kunststoffe in dem erwähnten Anwendungsbereich eine Mindest-Temperaturbeständigkeit haben. Als Mass hierfür sei beispielsweise die Glasübergangstemperatur $T_G$ genannt, deren Wert für die genannte Anwendung beispielsweise mindestens etwa 75 °C betragen soll. Die erfindungsgemäss zu verwendenden Polymerisate erfüllen diese Forderung.

Die Glasübergangstemperatur der Polymerisate beträgt beispielsweise mindestens 80 °C, bevorzugt mindestens 100 °C.

In vier Fällen kann es wünschenswert sein, einen zu hohen Wert der Glasübergangstemperatur herabzusetzen, um günstige Verarbeitungsbedingungen bei der thermoplastischen Verformung der Polymerisate zu erreichen. Die gewünschte thermische Beständigkeit, gemessen beispielsweise als Einfriertemperatur $T_E$, als Glasübergangstemperatur $T_G$ oder als Erweichungspunkt nach Vicat B, kann nun vorteilhaft durch Copolymerisation der obengenannten fluorhaltigen Styrole mit den obengenannten Comonomeren eingestellt werden, wenn eines der Homopolymerisate aus den Styrolen der Formel (I) die gewünschten Anforderungen nicht erfüllt. Diese Copolymerisation ist gleichzeitig geeignet, um die Kombination von Brechungsindex und Dispersion zu variieren. Für die erfindungsgemässe Verwendung als Material für optische Systeme besitzen die Polymerisate im allgemeinen Intrinsicviskositäten [η] von etwa 0,1 bis etwa 1,5 dl/g, vorzugsweise von 0,2 bis 1,0 dl/g, gemessen in Aceton bei 25 °C.

Selbstverständlich können die Polymerisate übliche Zusätze oder Verarbeitungshilfsmittel, wie

Stabilisatoren, Gleit- und Trennmittel oder Ultraviolett-Absorber in Mengen von jeweils etwa 0,01 bis etwa 2 Gew.-% enthalten. Die optischen Körper, die aus den Polymerisaten erhalten werden können, können nach der Formgebung in bekannter Weise nachbearbeitet, beispielsweise zentriert oder vergütet werden.

Es liegt selbstverständlich innerhalb des allgemeinen Erfindungsgedankens, Polymerisate, die als Monomereinheiten substituierte Styrole mit mindestens 3 Fluoratomen enthalten und die die überraschende und technisch sehr interessante Kombination von niedrigem Brechungsindex und hoher Dispersion (entspricht einer niedrigen Abbé-Zahl) aufweisen, die jedoch eine tiefere Glasübergangstemperatur als 80 °C haben, für die Herstellung von optischen Systemen einzusetzen, wenn durch geeignete Massnahmen eine übermässige Erwärmung und damit eine Verformung der optischen Körper vermieden wird. Solche geeignete Massnahmen können beispielsweise eine ausreichende Kühlung des optischen Systems oder die Verwendung von wenig Wärmestrahlung entwickelnden Lichtquellen sein.

Als optische Systeme seien beispielsweise Linsen, Linsensysteme, Prismen oder andere optische Körper für Photo- oder Filmkameras, Projektoren, Ferngläser, Mikroskope oder andere optische Geräte genannt.

Die erfindungsgemäss zu verwendenden Homo- oder Copolymerisate, die als Monomereinheiten mindestens ein Styrol der Formel (I) enthalten, können hergestellt werden, indem man mindestens ein Styrol der Formel (I) gegebenenfalls im Gemisch mit mindestens einem weiteren Vinylmonomeren als Comonomeres bei erhöhter Temperatur unter Luftausschluss und gegebenenfalls in Gegenwart eines Lösungsmittels radikalisch polymerisiert.

Substituierte Styrole der Formel (I) für das Herstellungsverfahren sind bekannt. So sind die 3 isomeren Trifluormethylstyrole aus J. Am. Chem. Soc. 72, 2283 (1950) bekannt und können beispielsweise durch Wasserabspaltung aus den entsprechend substituierten Phenylmethylcarbinolen in Gegenwart von Phosphorpentoxid erhalten werden (J. Am. Chem. Soc. 68, 736 (1946). Substituierte Styrole der Formel (I) können weiterhin durch Umsetzung der entsprechend substituierten Benzylhalogenide mit Triphenylphosphin bei erhöhter Temperatur, gegebenenfalls in Gegenwart eines höher siedenden Lösungsmittels, zu den entsprechend substituierten Benzyltriphenyl-phosphoniumhalogeniden und deren weitere Umsetzung mit überschüssigem Paraformaldehyd in wässriger Suspension und mit mindestens äquimolarer Menge einer starken Base bei 0 bis 100 °C erhalten werden. Die gegebenenfalls als Comonomere im Herstellungsverfahren einsetzbaren Vinylmonomeren, die weiter oben bereits genannt wurden, sind dem Fachmann bekannt.

Die radikalische Polymerisation kann rein thermisch, durch Bestrahlung mit Ultraviolett-Strahlung enthaltendem Licht oder durch Zusatz von Radikalbildnern ausgelöst werden. Als Radikalbildner seien beispielsweise Redox-Systeme oder anorganische oder organische Peroxiverbindungen, wie Dilauroylperoxid, Benzoylperoxid oder tert.-Butyl-peroctanoat, oder Azoverbindungen, wie Azoisobuttersäurenitril, genannt. Von diesen Möglichkeiten sind die thermische Polymerisation und die Polymerisation unter Zusatz von Peroxiverbindungen oder Azoverbindungen bevorzugt.

Als erhöhte Temperatur sei der Bereich 30 °C bis etwa 150 °C genannt. Hierbei wird die rein thermische Polymerisation bevorzugt im höheren Teil des genannten Temperaturbereichs, beispielsweise 80 bis 150 °C durchgeführt, während die radikalische Polymerisation unter Zusatz eines Radikalbildners im unteren Teil des genannten Temperaturbereichs, beispielsweise 30 bis 120 °C, durchgeführt wird.

Für den Fall, dass die Polymerisation in Gegenwart eines Lösungsmittels durchgeführt wird, seien beispielsweise Lösungsmittel aus der Gruppe der Ester, wie Essigsäureethylester, oder der Gruppe der Ketone, wie Aceton oder Ethylmethylketon, genannt.

Die Polymeren können beispielsweise durch Eindampfen der Lösung oder durch Ausfällung, beispielsweise mit Hilfe von Methanol, aus dem Reaktionsansatz gewonnen werden. Die Polymeren können durch weiteres Umfällen gereinigt oder fraktioniert werden.

Beispiele

Die Glasübergangstemperaturen $T_G$ wurden mit dem thermomechanischen Analysator Typ 942 Dupont gemessen. Technische Gerätedaten: Messsonden ∅ 1 mm, Last 20p, Heizrate = 5° K/min.

Beispiel 1

200 g o-Trifluormethylstyrol werden sorgfältig von Sauerstoff befreit und unter Rühren auf 130 °C erhitzt. Nach 2,25 Stunden beginnt der Polymersirup an der Rührerwelle hochzusteigen. Der Ansatz wird dann mit 200 ml Aceton verdünnt und in 2 l Methanol eingerührt. Nach dem Trocknen im Vakuum bei 80 °C erhält man 121 g Poly-o-trifluormethylstyrol.

$[\eta] = 0{,}45$ [dl/g] in Aceton bei 25 °C

$n_D = 1{,}51$; $\nu_D = 35 \pm 2$

$T_G = 175 \pm 10$ °C

Beispiel 2

500 g m-Trifluormethylstyrol und 5 g Dilauroylperoxid werden in Abwesenheit von Sauerstoff bei 70 °C polymerisiert. Nach ca. 3 Std. ist die Viskosität so weit gestiegen, dass die Masse nur noch sehr schwer rührbar ist. Der Rührer wird dann abgestellt und die Innentemperatur durch abwechselndes Heizen und Kühlen zwischen 70 und 85 °C gehalten. Nach 10 Stunden Gesamtpolymerisationszeit wird das Polymere in 750 ml Aceton in der Hitze gelöst und die Acetonlösung in Wasser gefällt. Das Polymerisat wird mit Wasser durchgeknetet und im Vakuum bei 50 °C getrocknet.

Ausbeute: 480 g Polymer; [η] = 0,41 [dl/g] in THF bei 25 °C

$n_D$ = 1,50; $v_D$ = 38 ± 2

$T_G$ = 63 ± 5 °C

Beispiel 3

In 100 g p-Trifluormethylstyrol werden 200 mg Azoisobuttersäurenitril gelöst. Die Lösung wird unter Sauerstoffausschluss bei 70 °C gerührt. Nach 6 Stunden wird der Rührer wegen zu hoher Viskosität der Masse abgestellt und die Innentemperatur für weitere 18 Stunden zwischen 70 und 80 °C gehalten. Nach dem Lösen in 200 ml Aceton wird das Polymere in 2 l Wasser ausgefällt, mit Methanol durchgeknetet und bei 60 °C im Vakuum getrocknet.

Ausbeute: 93 g [η] = 0,37 [dl/g] in Aceton bei 25 °C

$n_D$ = 1,50; $v_D$ = 36 ± 2

$T_G$ = 101 ± 10 °C

Beispiel 4

Eine Mischung aus 50 g o-Trifluormethylstyrol, 50 g Methacrylsäuremethylester und 0,4 g tert.-Butyl-peroctanoat wird sorgfältig von Sauerstoff befreit und unter Stickstoff bei 100 °C Innentemperatur gerührt, bis die Masse nur noch schwer rührbar ist (ca. 1 Stunde). Der Ansatz wird in 150 ml Aceton heiss gelöst und in 1 l Methanol ausgefällt. Man erhält 58 g Copolymerisat.

[η] = 0,295 [dl/g] in Aceton bei 25 °C

Elementaranalyse: 15,7% Fluor ≙ 47,4% o-Trifluormethylstyrol

$n_D$ = 1,50; $v_D$ = 46 ± 2, $T_G$ = 130 ± 10 °C

Beispiel 5

Eine sauerstofffreie Mischung von 140 g o-Trifluormethylstyrol und 60 g Styrol wird unter Rühren in Stickstoffatmosphäre thermisch bei 125–130 °C Innentemperatur polymerisiert. Nach 135 Minuten ist die Masse nur noch schwer rührbar. Es werden dann langsam 300 ml Aceton zugegeben und der Ansatz bis zur vollständigen Lösung bei ca. 50 °C weitergerührt.

Nach dem Ausfällen in Methanol und Trocknung bei 80 °C im Vakuum erhält man 94,5 g Copolymeres

[η] = 0,37 [dl/g] in Aceton bei 25 °C Fluorgehalt 21,0% ≙ 66,1% o-Trifluormethylstyrol

$n_D$ = 1,54; $v_D$ = 34 ± 2, $T_G$ = 131 ± 10 °C

Beispiel 6

Eine Mischung von 45 g o-Trifluormethylstyrol und 15 g n-Butylacrylat wird sorgfältig von Sauerstoff befreit und unter $N_2$ bei 115–120 °C thermisch polymerisiert. Nach 4 Stunden wird der Ansatz langsam mit 100 ml Aceton versetzt, die erhaltene Lösung in 600 ml Methanol ausgefällt und das Polymerisat bei 80 °C im Vakuum getrocknet. Ausbeute: 23 g [η] = 0,52 [dl/g] in Aceton bei 25 °C

Fluor = 26,3% ≙ 79,4 Gew.-% o-Trifluormethylstyrol $n_D$ = 1,505; $v_D$ = 40,5 ± 2

$T_G$ = 122 ± 10 °C

Beispiel 7

a) 36 g o-Trifluormethylstyrol, 24 g Ethylacrylat und 120 mg Dibenzoylperoxid werden in Abwesenheit von Sauerstoff unter Rühren 3,2 Stunden zum Sieden erhitzt. Nach Zugabe von 100 ml Aceton wird das Polymere in 600 ml Methanol ausgefällt und bei 60 °C im Vakuum getrocknet.

Ausbeute: 25,3 g

[η] = 0,30 [dl/g] in Aceton bei 25 °C

Fluor = 21,1 Gew.-% ≙ 63,7 Gew.-% o-Trifluormethylstyrol

$n_D$ = 1,50; $v_D$ = 44,5 ± 2 $T_G$ = 80 ± 10°C

b) Eine Lösung von 60 g o-Trifluormethylstyrol, 40 g Ethylacrylat und 1 g Dibenzoylperoxid in 50 ml Ethylacetat wird 4,5 Stunden in Abwesenheit von Sauerstoff unter Rückfluss gekocht, dann mit 100 ml Aceton versetzt und das Polymere in 1 l Methanol ausgefällt. Nach dem Trocknen im Vakuum bei 80 °C erhält man 48,7 g Copolymeres.

[η] = 0,165 dl/g in Aceton bei 25 °C

Fluor = 21,0 Gew.-% ≙ 63,4 Gew.-% o-Trifluormethylstyrol

$n_D$ = 1,50, $v_D$ = 44,0 ± 2, $T_G$ = 79 ± 10°C

Beispiel 8

Eine Mischung von 80 g o-Trifluormethylstyrol, 20 g Acrylnitril und 300 mg Dilauroylperoxid wird unter sorgfältigem Sauerstoffausschluss bei 85 °C gerührt. Nach 4,25 Stunden beginnt die Masse an der Rührerwelle hochzusteigen. Es werden dann 100 ml Aceton zugegeben und das Polymere in 1 l Methanol ausgefällt. Nach dem Trocknen im Vakuum bei 80 °C erhält man 46 g Copolymeres.

[η] = 0,65 [dl/g] in Aceton bei 25 °C

Fluorgehalt = 27,2% ≙ 82,2 Gew.-% o-Trifluormethylstyrol

$n_D$ = 1,504; $v_D$ = 39 ± 2

$T_G$ = 140 ± 10 °C

Beispiel 9

Entsprechend der Arbeitsweise von Beispiel 2 wird aus p-Perfluorisopropyl-styrol Poly-p-perfluorisopropylstyrol mit folgenden Werten erhalten:

[η] = 0,57 [dl/g] in Aceton bei 25 °C

$n_D$ = 1,44; $v_D$ = 43 ± 2; $T_G$ = 108 ± 10 °C

Beispiel 10

Entsprechend der Arbeitsweise von Beispiel 2 wird aus m,m-Bis-Trifluormethyl-styrol Poly-m,m-bis-trifluormethyl-styrol mit folgenden Werten erhalten:

[η] = 0,41 [dl/g] in Aceton bei 25 °C

$n_D$ = 1,45; $v_D$ = 42,5 ± 2; $T_G$ = 60 ± 10°C

Beispiel 11

25 g eines äquimolaren Gemisches von 2,4- und 2,5-Bis-trifluormethyl-styrol werden mit 0,25 g Dilauroylperoxid versetzt und unter Sauerstoffausschluss 16 Stunden bei 70 °C polymerisiert. Das Polymerisat wird dann in 200 ml Aceton gelöst und anschliessend in 1,2 l Methanol ausgefällt. Nach dem Trocknen bei 100–120 °C erhält man 21,5 g Polymerisatpulver.

[η] = 0,45 [dl/g] in Aceton bei 25 °C

$n_D$ = 1,45; $v_D$ = 41,5 ± 2; $T_G$ = 172 ± 10 °C

Beispiel 12

214 g (1,1 Mol) o-Trifluormethylbenzylchlorid werden vorgelegt und auf etwa 150 °C erhitzt. Unter Rühren gibt man dazu eine etwa 100 °C heisse Lösung von 262 g (1 Mol) Triphenylphosphin in 115 ml Xylol. Es wird kurz bei 150 °C nachgerührt, auf 20 °C abgekühlt, der Kristallbrei abfiltriert und mit Cyclohexan/Methylenchlorid (7 : 3) gewaschen. Nach Trocknung bei 170 °C und 0,1 Torr erhält man 412 g (90,2% der theoretischen Ausbeute) o-Trifluormethylbenzyl-triphenylphosphoniumchlorid.

Beispiel 13

457 g (1 Mol) o-Trifluormethylbenzyl-triphenylphosphoniumchlorid und 150 g (5 Mol) Paraformaldehyd werden in 1200 ml Wasser vorgelegt. Bei etwa 20 °C werden 150 · ml 50 gew.-%ige Natronlauge zugegeben. Man lässt 1 Stunde bei 40 bis 50 °C nachreagieren und destilliert dann mit Wasserdampf das gebildete o-Trifluormethylstyrol aus dem Reaktionsgemisch. Die organische Phase des Destillats enthält 170 g (etwa 98% der theoretischen Ausbeute) o-Trifluormethylstyrol mit einer Reinheit von 99% nach gaschromatographischer Analyse. $n_D^{20}$ : 1.4663. Kp.: 61 °C bei 53 mbar.

**Patentansprüche**

1. Verwendung von Homo- und Copolymerisaten, die als Monomereinheiten mindestens ein Styrol der Formel

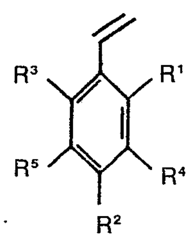

enthalten, in der

$R^1$, $R^2$ und $R^3$ unabhängig voneinander Wasserstoff, Fluor oder teilweise oder vollständig fluoriertes Alkyl oder Alkoxy bedeuten und

$R^4$ und $R^5$ unabhängig voneinander für Wasserstoff oder Fluor stehen, wobei die Gesamtzahl der Fluoratome in den Resten $R^1$ bis $R^5$ mindestens 3 und die Gesamtzahl der Kohlenstoffatome in den Resten $R^1$ bis $R^3$ höchstens 8 beträgt; zur Herstellung optischer Systeme.

2. Verwendung nach Anspruch 1, dadurch gekennzeichnet, dass man Homo- und Copolymerisate einsetzt, die mindestens ein Styrol der Formel

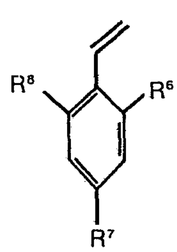

enthalten, in der

$R^6$, $R^7$ und $R^8$ unabhängig voneinander Wasserstoff oder fluoriertes Alkyl bedeuten, wobei die Gesamtzahl der Fluoratome in den Resten $R^6$ bis $R^8$ mindestens 3 und die Gesamtzahl der Kohlenstoffatome in den Resten $R^6$ bis $R^8$ 1 bis 6 beträgt.

3. Verwendung nach den Ansprüchen 1 und 2, dadurch gekennzeichnet, dass man Vinylpolymere einsetzt, die als Monomereinheiten eines oder mehrere substituierte Styrole mit mindestens 3 Fluoratomen in einer Menge von mindestens 30 Gew.-% des Polymerisates enthalten, und einen Brechungsindex von $n_D$ = 1,42 bis 1,55, eine Abbé-Zahl von $v_D$ = 30 bis 50 und eine Glasübergangstemperatur von mindestens $T_G$ = 80 °C besitzen.

**Claims**

1. Use of homopolymers and copolymers which contain, as monomer units, at least one styrene of the formula

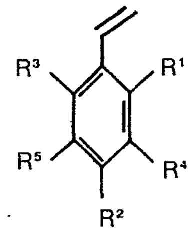

in which

$R^1$, $R^2$ and $R^3$ independently of one another denote hydrogen, fluorine or partly or completely fluorinated alkyl or alkoxy and

$R^4$ and $R^5$ independently of one another represent hydrogen or fluorine, the total number of fluorine atoms in the radicals

$R^1$ to $R^5$ being at least 3 and the total number of carbon atoms in the radicals $R^1$ to $R^3$ being at most 8, for the production of optical systems.

2. Use according to Claim 1, characterised in that homopolymers and copolymers are used which contain at least one styrene of the formula

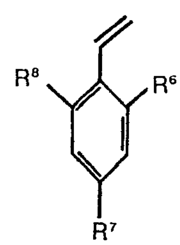

in which

$R^6$, $R^7$ and $R^8$ independently of one another denote hydrogen or fluorinated alkyl, the total number of fluorine atoms in the radicals

$R^6$ to $R^8$ being at least 3 and the total number of carbon atoms in the radicals $R^6$ to $R^8$ being 1 to 6.

3. Use according to Claims 1 and 2, characterised in that vinyl polymers are used which contain, as monomer units, one or more substituted styrenes with at least 3 fluorine atoms, in an amount of at least 30% by weight of the polymer, and have a refractive index $n_D$ of 1.42 to 1.55, an

Abbé number $v_D$ of 30 to 50 and a glass transition temperature $T_G$ of at least 80 °C.

**Revendications**

1. Utilisation d'homo- et copolymères qui contiennent comme motifs monomères au moins un styrène de formule

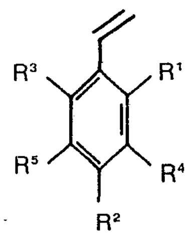

dans laquelle

$R^1$, $R^2$ et $R^3$ représentent indépendamment l'un de l'autre l'hydrogène, le fluor ou un groupe alkyle ou alcoxy partiellement ou totalement fluoré, et

$R^4$ et $R^5$ représentent indépendamment l'un de l'autre l'hydrogène ou le fluor, le nombre total des atomes de fluor dans les restes $R^1$ à $R^5$ étant au moins égal à 3 et le nombre total des atomes de carbone dans les restes $R^1$ à $R^3$ étant au plus égal à 8, pour la fabrication de systèmes optiques.

2. Utilisation selon la revendication 1, caractérisée en ce que l'on utilise des homo- et copolymères qui contiennent au moins un styrène de formule

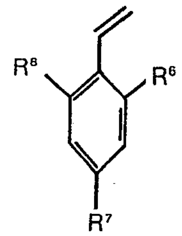

dans laquelle

$R^6$, $R^7$ et $R^8$ représentent indépendamment l'un de l'autre l'hydrogène ou un alkyle fluoré, le nombre total des atomes de fluor dans les restes $R^6$ à $R^8$ étant au moins égal à 3 et le nombre total des atomes de carbone dans les restes $R^6$ à $R^8$ étant de 1 à 6.

3. Utilisation selon les revendications 1 et 2, caractérisée en ce que l'on utilise des polymères vinyliques qui contiennent comme motifs monomères au moins 30% en poids, par rapport au polymère, d'un ou plusieurs styrènes substitués ayant au moins 3 atomes de fluor et qui possèdent un indice de réfraction $n_D$ = 1,42 à 1,55, un indice d'Abbé $v_D$ = 30 à 50 et une température de transition vitreuse au moins égale à $T_G$ = 80 °C.